# EUROPÄISCHE PATENTSCHRIFT

(11) **EP 1 479 709 B1**
(45) Veröffentlichungstag und Bekanntmachung des Hinweises auf die Patenterteilung: **12.05.2010**
(21) Anmeldenummer: 04101171.9
(22) Anmeldetag: 22.03.2004
(51) Int. Cl.: C08G 63/199, C08G 63/20, C08G 18/42

(54) **Verzweigte, amorphe Makropolyole auf Polyesterbasis mit enger Molekulargewichtsverteilung**
Polyester based branched, amorphous macropolyols having narrow molecular weight distribution
Macropolyols ramifiés, amorphes à base de polyester ayant une distribution moléculaire étroite

(30) Priorität: 19.05.2003 DE 10322845
(43) Veröffentlichungstag der Anmeldung: 24.11.2004
(73) Patentinhaber: Evonik Degussa GmbH, 45128 Essen (DE)
(72) Erfinder: Glöckner, Patrick, Dr., 40885 Ratingen (DE); Franzmann, Giselher, Dr., 58453 Witten (DE); Schmitthenner, Martin, Dr., 58300 Wetter (DE)

(56) Entgegenhaltungen:
- EP-A- 0 705 858
- DE-A- 19 707 733

## Beschreibung

Die Erfindung betrifft verzweigte, amorphe Makropolyole auf Polyesterbasis mit enger Molekulargewichtsverteilung.

Gesättigte Polyesterharze sind bekannt. Sie werden meistens durch Kondensation von gesättigten Dicarbonsäuren, deren Anhydriden oder anderen veresterbaren Derivaten mit Diolen hergestellt. Ihre Eigenschaften hängen weitgehend von Art und Mengenverhältnis der Ausgangsstoffe ab.

Verzweigte Makropolyole auf Polyesterbasis sind z. B. bekannt aus DE 196 49 394. Bei bestimmter Rohstoffauswahl sind jedoch dort insbesondere die OH-Zahlen, mit 80 bis 300 mg KOH/g und die Säurezahlen mit 5 bis 30 mg KOH/g relativ hoch.

Bei hohen OH-Zahlen und Säurezahlen besitzen die Polymermoleküle nicht die gewünschte Funktionalität und hohe Molekulargewicht, so dass ein Nachteil darin besteht, dass ein höherer Anteil Vernetzer erforderlich ist. Insbesondere bei Verwendung von Isocyanaten als Vemetzermoleküle werden somit hohe Kosten verursacht. Nachteilig kann sich außerdem die hohe Säurezahl auswirken, da durch die hydrophilen Zentren (Carboxylgruppen) die Wasserbeständigkeit von z. B. Beschichtungen negativ beeinflusst werden kann.

Aus EP 1 172 394 sind ebenfalls Polyesterpolyole mit ähnlichem Aufbau und Nachteilen bekannt.

Aufgabe der vorliegenden Erfindung war es, aus der Vielzahl der Möglichkeiten und der hohen Variationsbreite des Standes der Technik neue amorphe Makropolyole mit hoher Funktionalität zu finden, die gleichzeitig über eine geringe Viskosität und Polydispersität verfügen.

Es war überraschend, dass durch den Einsatz einer cycloaliphatischen 1,2-Dicarbonsäure und/oder deren Derivaten wie z. B. Anhydrid und einer mindestens trifunktionellen Alkoholkomponente Makropolyole mit hoher Funktionalität und hohem Verzweigungsgrad und gleichzeitig niedriger Viskosität und Polydispersität erhalten wurden.

Gegenstand der Erfindung sind verzweigte, amorphe Makropolyole auf Polyesterbasis mit enger Molekulargewichtsverteilung, aufgebaut aus
A) mindestens einer Dicarbonsäurekomponente
   aus
   1) mindestens 85 mol-% mindestens einer cycloaliphatischen 1,2-Dicarbonsäure und/oder Anhydrid und/oder Ester,
      und
   2) maximal 15 mol-% mindestens einer weiteren Dicarbonsäure und/oder Anhydrid und/oder Ester,
      und
B) mindestens einer Alkoholkomponente
   aus
   1) 5 bis 30 mol-% mindestens einem mindestens trifunktionellen Alkohol,
      und
   2) 70 bis 95 mol-% mindestens einem weiteren Diol,
gekennzeichnet durch
- eine Funktionalität von 3,5 bis 10,0, bevorzugt 3,5 bis 8,0, besonders bevorzugt 4,0 bis 6,0,
- ein Mₙ von 2000 bis 10000 g/mol, bevorzugt 2000 bis 7000 g/mol besonders bevorzugt 2500 bis 4000,
- ein M_{w} von 8000 bis 60000 g/mol, bevorzugt 8000 bis 40000 g/mol besonders bevorzugt 8000 bis 20000,
- eine Polydispersität von 2,5 bis 30, bevorzugt 3 - 25, besonders bevorzugt 3 bis 15,
- eine OH-Zahl von 0 bis 150 mg KOH/g, vorzugsweise 30 bis 80 mg KOH/g, besonders bevorzugt 40 bis 60 mg KOH/g,
- eine Säurezahl von 0 bis 4,9 mg KOH/g, bevorzugt 0-3,0 mg KOH/g, besonders bevorzugt 0-1,5,
- eine dynamische Viskosität des Harzes, 65%ig in Solvesso^{®} 150 / Butylglykol (3:1), von 1000 bis 20000 m Pa·s, bevorzugt 1000 bis 15000 m Pa·s, besonders bevorzugt 1000 bis 10000 mPa·s.

Die erfindungsgemäßen amorphen, verzweigten Makropolyole auf Polyesterbasis mit enger Molekulargewichtsverteilung enthalten als Ausgangssäurekomponente mindestens eine cycloaliphatische 1,2-Dicarbonsäure wie z. B. 1,2-Cyclohexandicarbonsäure und/oder Methyltetrahydro-, Tetrahydro- und/oder Methylhexahydro-Phthalsäure(anhydrid) und/oder deren Derivate wie z. B. deren Anhydrid in Mengen von mindestens 85 mol-%, bevorzugt 100 Mol-%, bezogen auf die Dicarbonsäurekomponente.

Es können auch zusätzlich aromatische und/oder aliphatische und/oder cycloaliphatische Monocarbonsäuren und/oder Dicarbonsäuren und/oder Polycarbonsäuren enthalten sein, wie z. B. Phthalsäure, Isophthalsäure, Terephthalsäure, 1,3-Cyclohexandicarbonsäure, 1,4-Cyclohexandicarbonsäure, Bernsteinsäure, Sebazinsäure, Dodecandisäure, Adipinsäure, Azelainsäure, Pyromellitsäure und/oder Trimellitsäure, Isononansäure, 2-Ethylhexansäure. Bevorzugt sind Isophthalsäure, Phthalsäure, Bernsteinsäure, Sebacinsäure, Adipin- und/oder Azelainsäure, in Mengen von maximal 15 mol-%, bezogen auf die Dicarbonsäurekomponente, eingesetzt werden.

Jede Säurekomponente kann teilweise oder vollständig aus Anhydriden und/oder niedermolekularen Alkylestern, bevorzugt Methylestern und/oder Ethylestern, bestehen.

Als mindestens trifunktionelle Alkoholkomponente können z. B. Trimethylolpropan, Trimethylolethan, 1,2,6-Trihydroxyhexaerythrit, Glycerin, Trishydroxyethylisocyanurat, Pentaerytrit, Sorbit, Xylit und/oder Mannit verwendet werden, in Mengen von 5 bis 30 mol-%, bevorzugt von 5 bis 20 mol-%, bezogen auf die Alkoholkomponente.

Daneben kann die Alkoholkomponente weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Bisphenol A, B, C, F, Norbomylenglykol, 1,4-Benzyldimethanol und ethanol, 2,4-Dimethyl-2-ethylhexan-1,3-diol, Cyclohexandimethanol, Dicidol, Hexandiol, Neopentylglycol in Mengen von 70 bis 95 mol-%, bevorzugt von 80 bis 95 mol-%, bezogen auf die Alkoholkomponente eingesetzt.

Im Allgemeinen ist die Alkoholkomponente im Mol-Verhältnis von 0,8 bis 2,0 zu 1 zur Säurekomponente enthalten, bevorzugt 0,8 bis 1,5 zu 1. Besonders bevorzugt findet die Umsetzung der Alkoholkomponente im Mol-Verhältnis von 1,0 bis 1,3 zu 1 zur Säurekomponente statt.

Die erfindungsgemäßen gesättigten, amorphen Makropolyole können eine Säurezahl kleiner 5,0 mg KOH/g, bevorzugt kleiner 3,0, besonders bevorzugt zwischen 0 und 1,5 mg KOH/g sowie eine OH-Zahl zwischen 0 und 150 mg KOH/g, bevorzugt zwischen 30 und 80, besonders bevorzugt zwischen 40 und 60 mg KOH/g aufweisen.

Durch die Verwendung von 5 bis 30 mol-% mindestens eines mindestens trifunktionellen Alkohols in der gewählten Alkoholkomponente resultiert eine Funktionalität des Polymers von 3,5 bis 10,0, bevorzugt 3,5 bis 8,0, besonders bevorzugt 4,0 bis 6,0.

Die resultierenden zahlengemittelten Molekulargewichte Mₙ liegen von 2000 bis 10000 g/mol, bevorzugt 2000 bis 7000 besonders bevorzugt 2500 bis 4000 und die resultierenden gewichtsgemittelten Molekulargewichte M_{w} bei 8000 bis 60000 g/mol, bevorzugt 8000 bis 40000 besonders bevorzugt 8000 bis 20000.

Die Polydispersität liegt trotz der hohen Funktionalität der erfindungsgemäßen, amorphen Makropolyole zwischen 2,5 und 30, bevorzugt 3,0 - 25, besonders bevorzugt 3,0 bis 15, so dass eine dynamische Viskosität von 1000 bis 20000, bevorzugt 1000 bis 15000, besonders bevorzugt 1000 bis 10000 mPa·s resultiert (23 °C, 65 % in Solvesso^{®} 150 / Butylglykol (3:1)).

Die erfindungsgemäßen, verzweigten, amorphen Makropolyole auf Polyesterbasis mit enger Molekulargewichtsverteilung können auch Hilfs- und Zusatzstoffe ausgewählt aus Inhibitoren, Wasser und/oder organischen Lösemitteln, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzausrüstungen, internen Trennmitteln, Füllstoffen und/oder Treibmitteln, enthalten.

Gegenstand der Erfindung ist auch ein Verfahren zur Herstellung von verzweigten, amorphen Makropolyolen auf Polyesterbasis mit enger Molekulargewichtsverteilung durch Umsetzung von
A) mindestens einer Dicarbonsäurekomponente
   aus
   1) mindestens 85 mol-% mindestens einer cycloaliphatischen 1,2-Dicarbonsäure und/oder Anhydrid und/oder Ester,
      und
   2) maximal 15 mol-% mindestens einer weiteren Dicarbonsäure und/oder Anhydrid und/oder Ester,
      und
B) mindestens einer Alkoholkomponente
   aus
   1) 5 bis 30 mol-% mindestens einem mindestens trifunktionellen Alkohol,
      und
   2) 70 bis 95 mol-% mindestens einem weiteren Diol,
      gekennzeichnet durch
      - eine Funktionalität von 3,5 bis 10,0,
      - ein Mₙ von 2000 bis 10000 g/mol,
      - ein M_{w} von 8000 bis 60000 g/mol,
      - eine Polydispersität von 2,5 bis 30,
      - eine OH-Zahl von 0 bis 150 mg KOH/g,
      - eine Säurezahl von 0 bis 4,9 mg KOH/g,
      - eine dynamische Viskosität des Harzes, 65%ig in Solvesso^{®} 150 / Butylglykol (3:1), von 1000 bis 20000 mPa·s.

Die erfindungsgemäßen amorphen, verzweigten Makropolyole auf Polyesterbasis mit enger Molekulargewichtsverteilung werden durch Umsetzung der Alkoholkomponente und der Säurekomponente erhalten.

Hergestellt werden die erfindungsgemäßen, verzweigten, amorphen Makropolyole auf Polyesterbasis mit enger Molekulargewichtsverteilung durch (halb)kontinuierliche oder diskontinuierliche Veresterung der Ausgangssäuren und -alkohole in einstufiger oder mehrstufiger Fahrweise.

Das erfindungsgemäße Verfahren wird bevorzugt in einer Inertgasatmosphäre bei 150 bis 270 °C, bevorzugt bei 160 bis 230 °C, besonders bevorzugt bei 160 bis 210 °C durchgeführt. Als Inertgas können Stickstoff oder Edelgase, insbesondere Stickstoff eingesetzt werden. Das Inertgas weist einen Sauerstoffgehalt von weniger als 50 ppm, insbesondere weniger als 20 ppm, auf.

Die erfindungsgemäßen Makropolyole finden Verwendung als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen und insbesondere als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen mit Isocyanaten und Isocyanatderivaten und/oder Aminharzen als Vernetzer.

Die erfindungsgemäßen amorphen, verzweigten Makropolyole auf Polyesterbasis mit enger Molekulargewichtsverteilung werden durch das folgende Beispiel näher erläutert:

### Beispiel 1

| **mol-%** | **Gew.-%** | **Rohstoff** |
|---|---|---|
| Säurekomponente | | |
| 100 | 59,9 | 1,2-Cyclohexandicarbonsäureanhydrid |
| **100** | | **Summe Säurekomponente** |
| | | |
| Alkoholkomponente | | |
| 30 | 7,5 | Neopentylglykol |
| 39 | 10,3 | Monoethylenglykol |
| 15 | 13,2 | 1,6-Hexandiol |
| 16 | 9,1 | Trimethylolpropan |
| **100** | | **Summe Alkoholkomponente** |

59,9 Teile 1,2-Cyclohexandicarbonsäure werden mit 7,5 Teilen Neopentylglykol, 10,3 Teilen Monoethylenglykol, 13,2 Teilen 1,6-Hexandiol und 9,1 Teilen Trimethylolpropan bei max. 250 °C in Stickstoffatmosphäre zur Reaktion gebracht bis eine Säurezahl unter 1 mg KOH/g erreicht ist. Der Polyester wird nach Abkühlung 65 % in Solvesso^{®} 150 / Butylglykol (3:1) gelöst.

### Analytische Kennzahlen:

OHZ = 55 mg KOH-g⁻¹, SZ = 0,4 mg KOH·g⁻¹, OH-Funktionalität = 8,15
T_{g}=13°C
Mₙ = 3.600 g·mol⁻¹, M_{w} = 50.000 g·mol⁻¹, M_{w}/Mₙ = 13,9 g·mor⁻¹,
dyn. Viskosität, 23 °C, 65 % in Solvesso^{®} 150 / Butylglykol (3: 1) = 8.000 mPas

### Vergleichsbeispiel A

Der Polyester aus Beispiel 1 wurde anstatt mit 1,2- mit 1,4-Cyclohexandicarbonsäure in der Säurekomponente wiederholt.
Trotz der deutlich höheren OH-Zahl von 67 mg KOH/g sind dyn. Viskosität und Polydispersität signifikant höher. Außerdem wurden unlösliche, d. h. vergelte Anteil gefunden, so dass die analytischen Kennzahlen nur abgeschätzt werden konnten.

### Analytische Kennzahlen:

OHZ = 67 mg KOH·g⁻¹, SZ = 3,0 mg KOH·g⁻¹, OH-Funktionalität = 4,3
T_{g} = -1°C
Mₙ = ∼4.000 g·mol⁻¹, M_{w} = ∼4.000 g·mol⁻¹, M_{w}/Mₙ = >11 g·mol⁻¹,
dyn. Viskosität, 23 °C, 65 % in Solvesso^{®} 150 / Butylglykol (3:1) = ∼10.000 mPas

## Patentansprüche

1. Verzweigte, amorphe Makropolyole auf Polyesterbasis mit enger Molekulargewichtsverteilung, aufgebaut aus
A) mindestens einer Dicarbonsäurekomponente
aus
1) mindestens 85 mol-% mindestens einer cycloaliphatischen 1,2-Dicarbonsäure und/oder Anhydrid und/oder Ester,
und
2) maximal 15 mol-% mindestens einer weiteren Dicarbonsäure und/oder Anhydrid und/oder Ester,
und
B) mindestens einer Alkoholkomponente
aus
1) 5 bis 30 mol-% mindestens einem mindestens trifunktionellen Alkohol,
und
2) 70 bis 95 mol-% mindestens einem weiteren Diol,
**gekennzeichnet durch**
• eine Funktionalität von 3,5 bis 10,0,
• ein Mₙ von 2000 bis 10000 g/mol,
• ein M_{w} von 8000 bis 60000 g/mol,
• eine Polydispersität von 2,5 bis 30,
• eine OH-Zahl von 0 bis 150 mg KOH/g,
• eine Säurezahl von 0 bis 4,9 mg KOH/g,
• eine dynamische Viskosität des Harzes, 65%ig in Solvesso^{®} 150 / Butylglykol (3:1), von 1000 bis 20000 mPa·s.

2. Verzweigte, amorphe Makropolyole auf Polyesterbasis mit enger Molekulargewichtsverteilung nach Anspruch 1, aufgebaut aus
A) mindestens einer Dicarbonsäurekomponente
aus
1) mindestens 85 mol-% mindestens einer cycloaliphatischen 1,2-Dicarbonsäure und/oder Anhydrid und/oder Ester,
und
2) maximal 15 mol-% mindestens einer weiteren Dicarbonsäure und/oder Anhydrid und/oder Ester,
und
B) mindestens einer Alkoholkomponente
aus
1) 5 bis 30 mol-% mindestens einem mindestens trifunktionellen Alkohol,
und
2) 70 bis 95 mol-% mindestens einem weiteren Diol,
**gekennzeichnet durch**
• eine Funktionalität von 3,5 bis 8,0,
• ein Mₙ von 2000 bis 7000 g/mol,
• ein M_{w} von 8000 bis 40000 g/mol,
• eine Polydispersität von 3 bis 25,
• eine OH-Zahl von 30 bis 80 mg KOH/g,
• eine Säurezahl von 0 bis 3,0 mg KOH/g,
• eine dynamische Viskosität des Harzes, 65%ig in Solvesso^{®} 150 / Butylglykol (3:1), von 1000 bis 15000 mPa·s.

3. Verzweigte, amorphe Makropolyole auf Polyesterbasis mit enger Molekulargewichtsverteilung nach Anspruch 2, aufgebaut aus
A) mindestens einer Dicarbonsäurekomponente
aus
1) mindestens 85 mol-% mindestens einer cycloaliphatischen 1,2-Dicarbonsäure und/oder Anhydrid,
und
2) maximal 15 mol-% mindestens einer weiteren Dicarbonsäure und/oder Anhydrid, und
B) mindestens einer Alkoholkomponente
aus
1) 5 bis 30 mol-% mindestens einem mindestens trifunktionellen Alkohol,
und
2) 70 bis 95 mol-% mindestens einem weiteren Diol,
**gekennzeichnet durch**
• eine Funktionalität von 4,0 bis 6,0,
• ein Mₙ von 2500 bis 4000 g/mol,
• ein M_{w} von 8000 bis 20000 g/mol,
• eine Polydispersität von 3,0 bis 15,
• eine OH-Zahl von 40 bis 60 mg KOH/g,
• eine Säurezahl von 0 bis 1,5 mg KOH/g,
• eine dynamische Viskosität des Harzes 65%ig in Solvesso^{®} 150 / Butylglykol (3:1) von 1000 bis 10000 mPa·s.

4. Verzweigte, amorphe Makropolyole auf Polyesterbasis mit enger Molekulargewichtsverteilung nach Anspruch 1,
**gekennzeichnet durch**
eine Säurezahl von 0 bis 3,0 mg KOH/g, bevorzugt eine Säurezahl von 0 bis 1,5 mg KOH/g.

5. Verzweigte, amorphe Makropolyole auf Polyesterbasis mit enger Molekulargewichtsverteilung nach Anspruch 1,
**gekennzeichnet durch**
eine OH-Zahl von 30 bis 80 mg KOH/g, bevorzugt eine OH-Zahl von 40 bis 60 mg KOH/g.

6. Verzweigte, amorphe Makropolyole auf Polyesterbasis mit enger Molekulargewichtsverteilung nach Anspruch 1,
**gekennzeichnet durch**
ein Mₙ von 2000 bis 7000 g/mol, bevorzugt ein Mₙ von 2500 bis 4000 g/mol, ein M_{w} von 8000 bis 40000 g/mol, bevorzugt ein M_{w} von 8000 bis 20000 g/mol.

7. Verzweigte, amorphe Makropolyole auf Polyesterbasis mit enger Molekulargewichtsverteilung nach Anspruch 1,
**gekennzeichnet durch**
eine Funktionalität von 3,5 bis 8,0, bevorzugt eine Funktionalität von 4,0 bis 6,0.

8. Verzweigte, amorphe Makropolyole auf Polyesterbasis mit enger Molekulargewichtsverteilung nach Anspruch 1,
**gekennzeichnet durch**
eine Polydispersität von 3 bis 25, bevorzugt eine Polydispersität von 3 bis 15.

9. Verzweigte, amorphe Makropolyole auf Polyesterbasis mit enger Molekulargewichtsverteilung nach mindestens einem der vorherigen Ansprüche,
**dadurch gekennzeichnet,**
**dass** als Ausgangssäurekomponente A1) 1,2-Cyclohexandicarbonsäure und/oder Methyltetrahydro-, Tetrahydro- und/oder Methylhexahydro-Phthalsäure(anhydrid) und/oder deren Derivate eingesetzt werden.

10. Verzweigte, amorphe Makropolyole auf Polyesterbasis mit enger Molekulargewichtsverteilung nach mindestens einem der vorherigen Ansprüche,
**dadurch gekennzeichnet,**
**dass** als Ausgangssäurekomponente 1,2-Cyclohexandicarbonsäure und/oder deren Derivate eingesetzt werden.

11. Verzweigte, amorphe Makropolyole auf Polyesterbasis mit enger Molekulargewichtsverteilung nach mindestens einem der vorherigen Ansprüche,
**dadurch gekennzeichnet,**
**dass** als Ausgangssäurekomponente A2) aromatische und/oder aliphatische und/oder cycloaliphatische Monocarbonsäuren und/oder Dicarbonsäuren und/oder Polycarbonsäuren und/oder deren Derivate eingesetzt werden.

12. Verzweigte, amorphe Makropolyole auf Polyesterbasis mit enger Molekulargewichtsverteilung nach mindestens einem der vorherigen Ansprüche,
**dadurch gekennzeichnet,**
**dass** als Komponente A2) Phthalsäure, Isophthalsäure, Terephthalsäure, 1,3-Cyclohexandicarbonsäure, 1,4-Cyclohexandicarbonsäure, Bernsteinsäure, Sebazinsäure, Dodecandisäure, Adipinsäure, Azelainsäure, Pyromellitsäure, Trimellitsäure, Isononansäure und/oder 2-Ethylhexansäureund/oder deren Derivate eingesetzt werden.

13. Verzweigte, amorphe Makropolyole auf Polyesterbasis mit enger Molekulargewichtsverteilung nach mindestens einem der vorherigen Ansprüche,
**dadurch gekennzeichnet,**
**dass** die Ausgangssäurekomponente (A) teilweise oder vollständig aus Anhydriden und/oder niedermolekularen Alkylestern, bevorzugt Methylestern und/oder Ethylestern, besteht.

14. Verzweigte, amorphe Makropolyole auf Polyesterbasis mit enger Molekulargewichtsverteilung nach mindestens einem der vorherigen Ansprüche,
**dadurch gekennzeichnet,**
**dass** als mindestens trifunktioneller Alkohol B1) Trimethylolpropan, Trimethylolethan, 1,2,6-Trihydroxyhexaerythrit, Glycerin, Trishydroxyethylisocyanurat, Pentaerytrit, Sorbit, Xylit und/oder Mannit eingesetzt werden.

15. Verzweigte, amorphe Makropolyole auf Polyesterbasis mit enger Molekulargewichtsverteilung nach mindestens einem der vorherigen Ansprüche,
**dadurch gekennzeichnet,**
**dass** als mindestens trifunktioneller Alkohol Trimethylolpropan und/oder Trimethylolethan und/oder Trishydroxyethylisocyanurat eingesetzt werden.

16. Verzweigte, amorphe Makropolyole auf Polyesterbasis mit enger Molekulargewichtsverteilung nach mindestens einem der vorherigen Ansprüche,
**gekennzeichnet dadurch,**
**dass** als Komponente B2) weitere aliphatische und/oder cycloaliphatische und/oder aromatische Diole und/oder Polyole eingesetzt werden.

17. Verzweigte, amorphe Makropolyole auf Polyesterbasis mit enger Molekulargewichtsverteilung nach mindestens einem der vorherigen Ansprüche,
**dadurch gekennzeichnet,**
**dass** als Komponente B2) Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Bisphenol A, B, C, F, Norbomylenglykol, 1,4-Benzyldimethanol und -ethanol, 2,4-Dimethyl-2-ethylhexan-1,3-diol, Cyclohexandimethanol, Dicidol, Hexandiol und/oder Neopentylglycol eingesetzt werden.

18. Verfahren zur Herstellung von verzweigten, amorphen Makropolyolen auf Polyesterbasis mit enger Molekulargewichtsverteilung durch Umsetzung von
A) mindestens einer Dicarbonsäurekomponente
aus
1) mindestens 85 mol-% mindestens einer cycloaliphatischen 1,2-Dicarbonsäure und/oder Anhydrid und/oder Ester,
und
2) maximal 15 mol-% mindestens einer weiteren Dicarbonsäure und/oder Anhydrid und/oder Ester,
und
B) mindestens einer Alkoholkomponente
aus
3) 5 bis 30 mol-% mindestens einem mindestens trifunktionellen Alkohol,
und
4) 70 bis 95 mol-% mindestens einem weiteren Diol,
**gekennzeichnet durch**
• eine Funktionalität von 3,5 bis 10,0,
• ein Mₙ von 2000 bis 10000 g/mol,
• ein M_{w} von 8000 bis 60000 g/mol,
• eine Polydispersität von 2,5 bis 30,
• eine OH-Zahl von 0 bis 150 mg KOH/g,
• eine Säurezahl von 0 bis 4,9 mg KOH/g,
• eine dynamische Viskosität des Harzes, 65%ig in Solvesso^{®} 150 / Butylglykol (3:1), von 1000 bis 20000 mPa·s.

19. Verwendung der Makropolyole nach mindestens einem der Ansprüche 1 bis 17 als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen.

20. Verwendung der Makropolyole nach mindestens einem der Ansprüche 1 bis 17 als Hauptkomponente, Basiskomponente oder Zusatzkomponente in Überzugsmitteln, Druckfarben, Pigment- und Abtönpasten, Masterbatches, Kugelschreiberpasten, Tinten, Polituren, Klebstoffen sowie Dicht- und Dämmstoffen mit Isocyanaten und Isocyanatderivaten und/oder Aminharzen als Vernetzer.

## Claims

1. Branched, amorphous, polyester-based macropolyols having a narrow molecular weight distribution, synthesized from
A) at least one dicarboxylic acid component
comprising
1) at least 85 mol% of at least one cycloaliphatic 1,2-dicarboxylic acid and/or anhydride and/or ester,
and
2) not more than 15 mol% of at least one further dicarboxylic acid and/or anhydride and/or ester,
and
B) at least one alcohol component
comprising
1) from 5 to 30 mol% of at least one at least trifunctional alcohol,
and
2) from 70 to 95 mol% of at least one further diol,
**characterized by**
• a functionality of from 3.5 to 10.0,
• an Mₙ of from 2000 to 10 000 g/mol,
• an M_{w} of from 8000 to 60 000 g/mol,
• a polydispersity of from 2.5 to 30,
• an OH number of from 0 to 150 mg KOH/g,
• an acid number of from 0 to 4.9 mg KOH/g, and
• a dynamic viscosity of the resin, at 65% in Solvesso^{®} 150 / butyl glycol (3:1), of from 1000 to 20 000 mPa·s.

2. Branched, amorphous, polyester-based macropolyols having a narrow molecular weight distribution according to Claim 1, synthesized from
A) at least one dicarboxylic acid component
comprising
1) at least 85 mol% of at least one cycloaliphatic 1,2-dicarboxylic acid and/or anhydride and/or ester,
and
2) not more than 15 mol% of at least one further dicarboxylic acid and/or anhydride and/or ester,
and
B) at least one alcohol component
comprising
1) from 5 to 30 mol% of at least one at least trifunctional alcohol,
and
2) from 70 to 95 mol% of at least one further diol,
**characterized by**
• a functionality of from 3.5 to 8.0,
• an Mₙ of from 2000 to 7000 g/mol,
• an M_{w} of from 8000 to 40 000 g/mol,
• a polydispersity of from 3 to 25,
• an OH number of from 30 to 80 mg KOH/g,
• an acid number of from 0 to 3.0 mg KOH/g, and
• a dynamic viscosity of the resin, at 65% in Solvesso^{®} 150 / butyl glycol (3:1), of from 1000 to 15 000 mPa·s.

3. Branched, amorphous, polyester-based macropolyols having a narrow molecular weight distribution according to Claim 2, synthesized from
A) at least one dicarboxylic acid component
comprising
1) at least 85 mol% of at least one cycloaliphatic 1,2-dicarboxylic acid and/or anhydride,
and
2) not more than 15 mol% of at least one further dicarboxylic acid and/or anhydride,
and
B) at least one alcohol component
comprising
1) from 5 to 30 mol% of at least one at least trifunctional alcohol,
and
2) from 70 to 95 mol% of at least one further diol,
**characterized by**
• a functionality of from 4.0 to 6.0,
• an Mₙ of from 2500 to 4000 g/mol,
• an M_{w} of from 8000 to 20 000 g/mol,
• a polydispersity of from 3.0 to 15,
• an OH number of from 40 to 60 mg KOH/g,
• an acid number of from 0 to 1.5 mg KOH/g, and
• a dynamic viscosity of the resin, at 65% in Solvesso^{®} 150 / butyl glycol (3:1), of from 1000 to 10 000 mPa·s.

4. Branched, amorphous, polyester-based macropolyols having a narrow molecular weight distribution according to Claim 1,
**characterized by**
an acid number of from 0 to 3.0 mg KOH/g, preferably an acid number of from 0 to 1.5 mg KOH/g.

5. Branched, amorphous, polyester-based macropolyols having a narrow molecular weight distribution according to Claim 1,
**characterized by**
an OH number of from 30 to 80 mg KOH/g, preferably an OH number of from 40 to 60 mg KOH/g.

6. Branched, amorphous, polyester-based macropolyols having a narrow molecular weight distribution according to Claim 1,
**characterized by**
an Mₙ of from 2000 to 7000 g/mol, preferably an Mₙ of from 2500 to 4000 g/mol, and an M_{w} of from 8000 to 40 000 g/mol, preferably an M_{w} of from 8000 to 20 000 g/mol.

7. Branched, amorphous, polyester-based macropolyols having a narrow molecular weight distribution according to Claim 1,
**characterized by**
a functionality of from 3.5 to 8.0, preferably a functionality of from 4.0 to 6.0.

8. Branched, amorphous, polyester-based macropolyols having a narrow molecular weight distribution according to claim 1,
**characterized by**
a polydispersity of from 3 to 25, preferably a polydispersity of from 3 to 15.

9. Branched, amorphous, polyester-based macropolyols having a narrow molecular weight distribution according to at least one of the preceding claims,
**characterized in that**
1,2-cyclohexanedicarboxyfic acid and/or methyltetrahydro-, tetrahydro- and/or methylhexahydro-phthalic acid (anhydride) and/or derivatives thereof are used as starting acid component A1).

10. Branched, amorphous, polyester-based macropolyols having a narrow molecular weight distribution according to at least one of the preceding claims,
**characterized in that**
1,2-cyclohexanedicarboxylic acid and/or derivatives thereof are used as starting acid component.

11. Branched, amorphous, polyester-based macropolyols having a narrow molecular weight distribution according to at least one of the preceding claims,
**characterized in that**
aromatic and/or aliphatic and/or cycloaliphatic monocarboxylic acids and/or dicarboxylic acids and/or polycarboxylic acids and/or derivatives thereof are used as starting acid component A2).

12. Branched, amorphous, polyester-based macropolyols having a narrow molecular weight distribution according to at least one of the preceding claims,
**characterized in that**
phthalic acid, isophthalic acid, terephthalic acid, 1,3-cyclohexanedicarboxylic acid, 1,4-cyclohexanedicarboxylic acid, succinic acid, sebacic acid, dodecanedioic acid, adipic acid, azelaic acid, pyromellitic acid, trimellitic acid, isononanoic acid and/or 2-ethylhexanoic acid and/or derivatives thereof are used as component A2).

13. Branched, amorphous, polyester-based macropolyols having a narrow molecular weight distribution according to at least one of the preceding claims,
**characterized in that**
the starting acid component (A) is composed in whole or in part of anhydrides and/or low molecular weight alkyl esters, preferably methyl esters and/or ethyl esters.

14. Branched, amorphous, polyester-based macropolyols having a narrow molecular weight distribution according to at least one of the preceding claims,
**characterized in that**
trimethylolpropane, trimethylolethane, 1,2,6-trihydroxyhexaerythritol, glycerol, trishydroxyethyl isocyanurate, pentaerythritol, sorbitol, xylitol and/or mannitol are used as at least trifunctional alcohol B1).

15. Branched, amorphous, polyester-based macropolyols having a narrow molecular weight distribution according to at least one of the preceding claims,
**characterized in that**
trimethylolpropane and/or trimethylolethane and/or trishydroxyethyl isocyanurate are used as at least trifunctional alcohol.

16. Branched, amorphous, polyester-based macropolyols having a narrow molecular weight distribution according to at least one of the precedinsg claims,
**characterized in that**
further aliphatic and/or cycloaliphatic and/or aromatic diols and/or polyols are used as component B2).

17. Branched, amorphous, polyester-based macropolyols having a narrow molecular weight distribution according to at least one of the preceding claims,
**characterized in that**
ethylene glycol, 1,2- and/or 1,3-propanediol, diethylene, dipropylene, triethylene and/or tetraethylene glycol, 1,2- and/or 1,4-butanediol, 1,3-butylethylpropanediol, 1,3-methylpropanediol, 1,5-pentanediol, bisphenol A, B, C, F, norbornylene glycol, 1,4-benzyldimethanol and ethanol, 2,4-dimethyl-2-ethylhexane-1,3-diol, cyclohexanedimethanol, Dicidol, hexanediol and/or neopentyl glycol are used as component B2).

18. Process for preparing branched, amorphous, polyester-based macropolyols having a narrow molecular weight distribution by reacting
A) at least one dicarboxylic acid component
comprising
1) at least 85 mol% of at least one cycloaliphatic 1,2-dicarboxylic acid and/or anhydride and/or ester,
and
2) not more than 15 mol% of at least one further dicarboxylic acid and/or anhydride and/or ester,
and
B) at least one alcohol component
comprising
3) from 5 to 30 mol% of at least one at least trifunctional alcohol,
and
4) from 70 to 95 mol% of at least one further diol,
**characterized by**
• a functionality of from 3.5 to 10.0,
• an Mₙ of from 2000 to 10 000 g/mol,
• an M_{w} of from 8000 to 60 000 g/mol,
• a polydispersity of from 2.5 to 30,
• an OH number of from 0 to 150 mg KOH/g,
• an acid number of from 0 to 4.9 mg KOH/g, and
• a dynamic viscosity of the resin, at 65% in Solvesso^{®} 150 / butyl glycol (3:1), of from 1000 to 20 000 mPa·s.

19. Use of the macropolyols according to at least one of Claims 1 to 17 as main component, base component or additional component in coating compositions, printing inks, pigment pastes, tinting pastes, masterbatches, ballpoint pastes, graphics inks, polishes, adhesives, sealants, and insulants.

20. Use of the macropolyols according to at least one of Claims 1 to 17 as main component, base component or additional component in coating compositions, printing inks, pigment pastes, tinting pastes, masterbatches, ballpoint pastes, graphics inks, polishes, adhesives, sealants, and insulants comprising isocyanates and isocyanate derivatives and/or amine resins as crosslinkers.

## Revendications

1. Macropolyols ramifiés, amorphes, à base de polyester, à étroite distribution de masse moléculaire, formés à partir
A) d'au moins un composant acide dicarboxylique constitué
1) d'au moins 85 % en moles d'au moins un acide 1,2-dicarboxylique cycloaliphatique et/ou anhydride et/ou ester,
et
2) d'au maximum 15 % en moles d'au moins un autre acide dicarboxylique et/ou anhydride et/ou ester,
et
B) d'au moins un composant alcool
constitué
1) de 5 à 30 % en moles d'au moins un alcool au moins trifonctionnel,
et
2) de 70 à 95 % en moles d'au moins un autre diol,
**caractérisés par**
• une fonctionnalité de 3,5 à 10,0,
• une masse moléculaire moyenne en nombre Mₙ de 2 000 à 10 000 g/mole,
• une masse moléculaire moyenne en poids M_{w} de 8 000 à 60 000 g/mole,
• une polydispersité de 2,5 à 30,
• un indice de groupes OH de 0 à 150 mg de KOH/g,
• un indice d'acide de 0 à 4,9 mg de KOH/g,
• une viscosité dynamique de la résine, à 65 % dans du Solvesso® 150/butylglycol (3:1), de 1 000 à 20 000 mPa.s.

2. Macropolyols ramifiés, amorphes, à base de polyester, à étroite distribution de masse moléculaire, selon la revendication 1, formés à partir
A) d'au moins un composant acide dicarboxylique constitué
1) d'au moins 85 % en moles d'au moins un acide 1,2-dicarboxylique cycloaliphatique et/ou anhydride et/ou ester,
et
2) d'au maximum 15 % en moles d'au moins un autre acide dicarboxylique et/ou anhydride et/ou ester, et
B) d'au moins un composant alcool
constitué
1) de 5 à 30 % en moles d'au moins un alcool au moins trifonctionnel,
et
2) de 70 à 95 % en moles d'au moins un autre diol,
**caractérisés par**
• une fonctionnalité de 3,5 à 8,0,
• une masse moléculaire moyenne en nombre Mₙ de 2 000 à 7 000 g/mole,
• une masse moléculaire moyenne en poids M_{w} de 8 000 à 40 000 g/mole,
• une polydispersité de 3 à 25,
• un indice de groupes OH de 30 à 80 mg de KOH/g,
• un indice d'acide de 0 à 3,0 mg de KOH/g,
• une viscosité dynamique de la résine, à 65 % dans du Solvesso® 150/butylglycol (3:1), de 1 000 à 15 000 mPa.s.

3. Macropolyols ramifiés, amorphes, à base de polyester, à étroite distribution de masse moléculaire, selon la revendication 2, formés à partir
A) d'au moins un composant acide dicarboxylique constitué
1) d'au moins 85 % en moles d'au moins un acide 1,2-dicarboxylique cycloaliphatique et/ou anhydride,
et
2) d'au maximum 15 % en moles d'au moins un autre acide dicarboxylique et/ou anhydride,
et
B) d'au moins un composant alcool
constitué
1) de 5 à 30 % en moles d'au moins un alcool au moins trifonctionnel,
et
2) de 70 à 95 % en moles d'au moins un autre diol,
**caractérisés par**
• une fonctionnalité de 4,0 à 6,0,
• une masse moléculaire moyenne en nombre Mₙ de 2 500 à 4 000 g/mole,
• une masse moléculaire moyenne en poids M_{w} de 8 000 à 20 000 g/mole,
• une polydispersité de 3,0 à 15,
• un indice de groupes OH de 40 à 60 mg de KOH/g,
• un indice d'acide de 0 à 1,5 mg de KOH/g,
• une viscosité dynamique de la résine, à 65 % dans du Solvesso® 150/butylglycol (3:1), de 1 000 à 10 000 mPa.s.

4. Macropolyols ramifiés, amorphes, à base de polyester, à étroite distribution de masse moléculaire, selon la revendication 1, **caractérisés par** un indice d'acide de 0 à 3,0 mg de KOH/g, de préférence un indice d'acide de 0 à 1,5 mg de KOH/g.

5. Macropolyols ramifiés, amorphes, à base de polyester, à étroite distribution de masse moléculaire, selon la revendication 1, **caractérisés par** un indice de groupes OH de 30 à 80 mg de KOH/g, de préférence un indice de groupes OH de 40 à 60 mg de KOH/g.

6. Macropolyols ramifiés, amorphes, à base de polyester, à étroite distribution de masse moléculaire, selon la revendication 1, **caractérisés par** une masse moléculaire moyenne en nombre Mₙ de 2 000 à 7 000 g/mole, de préférence une Mₙ de 2 500 à 4 000 g/mole, une masse moléculaire moyenne en poids M_{w} de 8 000 à 40 000 g/mole, de préférence une M_{w} de 8 000 à 20 000 g/mole.

7. Macropolyols ramifiés, amorphes, à base de polyester, à étroite distribution de masse moléculaire, selon la revendication 1, **caractérisés par** une fonctionnalité de 3,5 à 8,0, de préférence une fonctionnalité de 4,0 à 6,0.

8. Macropolyols ramifiés, amorphes, à base de polyester, à étroite distribution de masse moléculaire, selon la revendication 1, **caractérisés par** une polydispersité de 3 à 25, de préférence une polydispersité de 3 à 15.

9. Macropolyols ramifiés, amorphes, à base de polyester, à étroite distribution de masse moléculaire, selon au moins l'une des revendications précédentes, **caractérisés en ce qu'**on utilise comme composant acide de départ A1) l'acide 1, 2-cyclohexanedicarboxylique et/ou l'acide (l'anhydride) méthyltétrahydro-, tétrahydro- ou méthylhexahydro-phtalique et/ou leurs dérivés.

10. Macropolyols ramifiés, amorphes, à base de polyester, à étroite distribution de masse moléculaire, selon au moins l'une des revendications précédentes, **caractérisés en ce qu'**on utilise comme composant acide de départ l'acide 1,2-cyclohexanedicarboxylique et/ou ses dérivés.

11. Macropolyols ramifiés, amorphes, à base de polyester, à étroite distribution de masse moléculaire, selon au moins l'une des revendications précédentes, **caractérisés en ce qu'**on utilise comme composant acide de départ A2) des acides monocarboxyliques et/ou dicarboxyliques et/ou polycarboxyliques aromatiques et/ou aliphatiques et/ou cycloaliphatiques et/ou leurs dérivés.

12. Macropolyols ramifiés, amorphes, à base de polyester, à étroite distribution de masse moléculaire, selon au moins l'une des revendications précédentes, **caractérisés en ce qu'**on utilise comme composant A2) l'acide phtalique, l'acide isophtalique, l'acide téréphtalique, l'acide 1,3-cyclohexanedicarboxylique, l'acide 1,4-cyclohexanedicarboxylique, l'acide succinique, l'acide sébacique, l'acide dodécanedioïque, l'acide adipique, l'acide azélaïque, l'acide pyromellitique, l'acide trimellitique, l'acide isononanoïque et/ou l'acide 2-éthylhexanoïque et/ou leurs dérivés.

13. Macropolyols ramifiés, amorphes, à base de polyester, à étroite distribution de masse moléculaire, selon au moins l'une des revendications précédentes, **caractérisés en ce que** le composant acide de départ (A) consiste partiellement ou totalement en anhydrides et/ou esters alkyliques de faible masse moléculaire, de préférence en esters méthyliques et/ou esters éthyliques.

14. Macropolyols ramifiés, amorphes, à base de polyester, à étroite distribution de masse moléculaire, selon au moins l'une des revendications précédentes, **caractérisés en ce qu'**on utilise comme alcool au moins trifonctionnel B1) le triméthylpropane, le triméthyloléthane, le 1,2,6-trihydroxyhexaérythritol, le glycérol, le trishydroxyéthylisocyanurate, le pentaérythritol, le sorbitol, le xylitol et/ou le mannitol.

15. Macropolyols ramifiés, amorphes, à base de polyester, à étroite distribution de masse moléculaire, selon au moins l'une des revendications précédentes, **caractérisés en ce qu'**on utilise comme alcool au moins trifonctionnel le triméthylpropane et/ou le triméthyloléthane et/ou le trishydroxyéthylisocyanurate.

16. Macropolyols ramifiés, amorphes, à base de polyester, à étroite distribution de masse moléculaire, selon au moins l'une des revendications précédentes, **caractérisés en ce qu'**on utilise comme composant B2) d'autres diols et/ou polyols aliphatiques et/ou cycloaliphatiques et/ou aromatiques.

17. Macropolyols ramifiés, amorphes, à base de polyester, à étroite distribution de masse moléculaire, selon au moins l'une des revendications précédentes, **caractérisés en ce qu'**on utilise comme composant B2) l'éthylèneglycol, le 1,2- et/ou le 1,3-propanediol, le diéthylène-, dipropylène-, triéthylène-, tétraéthylèneglycol, le 1,2- et/ou 1,4-butanediol, le 1,3-butyléthylpropanediol, le 1,3-méthylpropanediol, le 1,5-pentanediol, le bisphénol A, B, C, F, le norbonylèneglycol, le 1,4-benzyldiméthanol et le 1,4-benzyldiéthanol, le 2,4-diméthyl-2-éthylhexane-1,3-diol, le cyclohexanediméthanol, le dicidol, l'hexanediol et/ou le néopentylglycol.

18. Procédé pour la préparation de macropolyols ramifiés, amorphes, à base de polyester, à étroite distribution de masse moléculaire, par mise en réaction
A) d'au moins un composant acide dicarboxylique constitué
1) d'au moins 85 % en moles d'au moins un acide 1,2-dicarboxylique cycloaliphatique et/ou anhydride et/ou ester,
et
2) d'au maximum 15 % en moles d'au moins un autre acide dicarboxylique et/ou anhydride et/ou ester,
et
B) d'au moins un composant alcool
constitué
3) de 5 à 30 % en moles d'au moins un alcool au moins trifonctionnel,
et
4) de 70 à 95 % en moles d'au moins un autre diol,
**caractérisés par**
• une fonctionnalité de 3,5 à 10,0,
• une masse moléculaire moyenne en nombre Mₙ de 2 000 à 10 000 g/mole,
• une masse moléculaire moyenne en poids M_{w} de 8 000 à 60 000 g/mole,
• une polydispersité de 2,5 à 30,
• un indice de groupes OH de 0 à 150 mg de KOH/g,
• un indice d'acide de 0 à 4,9 mg de KOH/g,
• une viscosité dynamique de la résine, à 65 % dans du Solvesso® 150/butylglycol (3:1), de 1 000 à 20 000 mPa.s.

19. Utilisation des macropolyols selon au moins l'une des revendications 1 à 17, en tant que composant principal, composant de base ou composant d'addition dans des produits de revêtement, des encres d'impression, des pâtes de pigments et de nuançage, des mélanges-maîtres, des pâtes pour stylos à bille, des encres, des vernis pour meubles, des adhésifs ainsi que des matières d'étanchéité et d'isolation.

20. Utilisation des macropolyols selon au moins l'une des revendications 1 à 17, en tant que composant principal, composant de base ou composant d'addition dans des produits de revêtement, des encres d'impression, des pâtes de pigments et de nuançage, des mélanges-maîtres, des pâtes pour stylos à bille, des encres, des vernis pour meubles, des adhésifs ainsi que des matières d'étanchéité et d'isolation avec des isocyanates et des dérivés d'isocyanates et/ou des résines amino en tant qu'agent de réticulation.
